# EUROPEAN PATENT APPLICATION

(11) **EP 1 821 252 A1**
(43) Date of publication of application: **22.08.2007**
(21) Application number: 07003143.0
(22) Date of filing: 14.02.2007
(51) Int. Cl.: G06Q 30/00, A47F 3/04

(54) **Retail merchandising unit**

(30) Priority: 14.02.2006 US 353688
(71) Applicant: Exhibitgroup/Giltspur, a division of Viad Corp., Phoenix AZ 85077 (US)
(72) Inventor: Knoettgen-Nap, Erin, Farmers Branch, Texas 75234 (US)
(74) Representative: Dehmel, Albrecht

(57) **Abstract**

Embodiments of a Retail Merchandising Unit (RMU) comprise at least one door for securing items within the RMU. The door(s) comprises a transparent portion that provides security for the items contained in the RMU, while allowing at least a portion of such items to be viewed. Preferably, the transparent portion restricts access to the RMU's interior, while permitting at least a portion of the items that are secured within the RMU to be viewed through such transparent portion. The door(s) may further contain one or more shelves on which merchandise may be placed, wherein the shelves are arranged such that when the door(s) are closed the shelves are secured within the interior of the RMU. Preferably, the transparent portion of a door permits the items placed on the door's shelve(s) to be viewed by passersby. Embodiments of the RMU may provide a self-contained storefront for marketing and selling merchandise.

## Description

The following description relates generally to Retail Merchandising Units (RMUs), and more particularly to RMUs having at least one door for securing items within the RMU.

### BACKGROUND OF THE INVENTION

Many businesses use Retail Merchandising Units (RMUs) to establish an effective storefront through which they can conduct retail sales in public areas, such as shopping malls, theme parks, sports arenas, and a wide variety of other public venues. An RMU may, for example, be implemented as a kiosk or other structure. RMUs may be employed for a vendor (e.g., retailer) to market its merchandise to prospective customers and conduct sales transactions with customers. For instance, an RMU generally includes shelves (or other display mechanisms) for displaying the vendor's merchandise to prospective customers when the RMU is open for business. RMUs also generally include at least some amount of storage space for storing the vendor's inventory of merchandise. Typically, RMUs further include a cash register and/or other equipment (e.g., computer, credit card processing equipment, etc.) for conducting point of sale (POS) transactions with customers. Thus, generally RMUs effectively provide a self-contained storefront for vendors, much like traditional retail stores.

RMUs often provide a relatively low-cost alternative for a vendor to obtain a storefront in a public area. That is, an RMU may be used by a vendor to establish a storefront in a public area (which may be a highly desirable area with high visibility and customer traffic, such as a busy shopping mall) with much less overhead than is associated with traditional retail stores. For instance, while RMUs do not provide the amount of retail space that is afforded by a traditional retail store, RMUs may be arranged in walkways (e.g., halls of shopping malls, etc.) or other available space. Traditional retail stores commonly have 1000 square feet of space (and much more in many instances), while RMUs generally consume from approximately 10 square feet to approximately 150 square feet. Because RMUs generally do not consume a large amount of space (as compared to traditional retail stores) and because the RMUs can often be placed in otherwise unused areas, RMUs may incur very economical rent and utility costs. Further, an owner of a given space, such as a shopping mall, may benefit by allowing RMUs to be arranged within the otherwise unused portions of such space to increase the offerings of goods/services within the space and to realize income from the rental of such RMUs which would not otherwise be realized from such unused portions of the space. Many types of businesses can be effectively run without requiring the space afforded by a traditional retail store, and may instead be capable of effectively displaying and conducting sales of their merchandise in an RMU. RMUs thus offer such businesses a relatively low-cost alternative for establishing a storefront in a desirable area.

It is generally desirable to secure items within an RMU when the RMU is closed for business. For instance, because RMUs are typically arranged in public areas (some of which may be open to the public beyond the hours of operation of the RMUs), it is desirable to be capable of securing items (e.g., inventory, POS equipment, money, etc.) in the RMU to safeguard such items from theft or vandalism.

Various mechanisms have been employed for securing items within an RMU when the RMU is closed for business. Many mechanisms fully conceal the items contained in the RMU from the view of passersby. As one example, a curtain may be employed that can be pulled around the RMU and locked when the RMU is closed for business. As another example, some RMUs include metal pull-down doors that can be pulled down on each side of the RMU and locked for securely enclosing items therein. Such mechanisms conceal the merchandise contained within the RMU from view of passersby, thereby diminishing the exposure of the goods/services offered by the vendor when the RMU is closed for business. Such concealing may be somewhat desirable from a security viewpoint, as passersby may be less tempted to attempt to break into the RMU to steal the merchandise contained therein. However, such concealing is much less desirable from a marketing viewpoint.

For example, consider an RMU located inside a shopping mall, wherein the RMU closes for business at 6:00 pm while the mall remains open to the public until 9:00 pm. Accordingly, the RMU is in the view of prospective customers who are in the mall between 6:00 pm and 9:00 pm. However, while closed for business, traditional RMUs obstruct the public from accessing the unit's contents by utilizing mechanisms (e.g., curtains or metal doors) that fully conceal the view of the items contained in the RMU. Thus, the RMU foregoes the exposure of its merchandise to prospective customers during the hours that it is closed for business in order to secure the items in the RMU.

In some instances, bars may be used for securing a portion of an RMU, which may not only obscure a potential customer's view but also creates an undesirable impression. Bars (such as are used for jail cells) connote an undesirable impression to prospective customers; the bars clearly convey a concern and desire for securing items in the RMU; and the bars are, at the very least, uninviting for prospective customers (i.e., bars do not invite prospective customers to view items contained within the RMU, even if the items are viewable through the bars). Thus, such configurations for securing items within an RMU are also undesirable from a marketing prospective.

Considering the above-mentioned size constraints that are prevalent with RMUs, efficient utilization of space for storing inventory, displaying merchandise, displaying signage, etc. is generally of importance. Generally, an increase of display space and/or more efficient utilization of available display space allows more opportunities for better marketing the vendor's merchandise. Some of the above-mentioned mechanisms for securing an RMU when it is closed for business undesirably consume space within the RMU when the RMU is open for business. For instance, a curtain or bars that are used to secure the RMU when closed for business may be stored within the RMU when it is open for business, thus resulting in a loss of fundamentally important signage and display space.

### SUMMARY OF THE INVENTION

In view of the above, a desire exists for an RMU that includes a mechanism for securing items within the RMU. Further, a desire exists for such a securing mechanism that enables items within the RMU (e.g., merchandise, information, etc.) to be viewed when the RMU is so secured. Yet a further desire exists for a securing mechanism that allows for a welcoming display of merchandise to prospective customers. Yet a further desire exists for a securing mechanism that enables efficient utilization of available display space and/or enhances the amount of display space available within an RMU.

Various embodiments of the present invention provide an RMU that comprises at least one door for securing items within the RMU. According to such embodiments, the at least one door comprises a transparent portion (e.g., glass, plastic, etc.) that provides security for the items contained in the RMU, while allowing at least a portion of such items to be viewed. That is, preferably the transparent portion restricts access to the RMU's interior (e.g., the transparent portion may be a substantially solid transparent material, such as glass, plastic, etc.), while permitting at least a portion of the items that are secured within the RMU to be viewed through such transparent portion. In certain embodiments, the door(s) contain one or more shelves (or other mechanisms for displaying items) on which merchandise (or other items) may be placed, wherein the shelves are arranged such that when the door(s) are closed the shelves are secured within the interior of the RMU. Thus, items placed on the shelves are secured within the RMU when the door(s) are closed.

Preferably, the transparent portion of a door permits the items placed on the door's shelve(s) to be viewed by passersby. Further, when open for business, the doors of such an embodiment may be opened and the items placed on the shelves remain displayed to passersby. Thus, according to certain embodiments, items arranged on shelves of the RMU's door(s) are displayed to prospective customers when the RMU is closed for business (and the door(s) are closed), as well as when the RMU is open for business (and the door(s) are opened), thereby enhancing the marketability of such items. Because the door(s) in such embodiments provide display space (e.g., shelves) for use when the RMU is open for business, such embodiments also enhance the utilization of available space in the RMU for displaying merchandise (or other items, such as signage, etc.) to prospective customers.

Embodiments of RMUs provided herein may be arranged in a public area for marketing a vendor's merchandise and conducting Point of Sale (POS) transactions. Thus, RMUs of various embodiments provided herein may be implemented to operate as a self-contained storefront for offering and selling merchandise. As used herein, unless otherwise qualified, the term "merchandise" is intended to encompass goods, services, and any other offerings from a given vendor. For instance, an RMU may be used for marketing and selling cellular telephones. As another example, an RMU may be used for marketing and selling cellular telephone service, instead of or in addition to the telephones. Various other types of merchandise are appropriate for marketing and selling through an RMU, and embodiments of the present invention are not limited to any particular type of merchandise being offered through an RMU.

In one embodiment, an RMU comprises a body having at least one door coupled thereto. Mounted to the door are removable and adjustable shelves on which the vendor's merchandise may be displayed. Additional shelves for displaying merchandise may be removably and adjustably mounted to the interior of the RMU's body. While the RMU is open for business, the RMU is configured into an "open configuration" by securing the door(s) in the open position. As a result, the merchandise arranged on the door's shelves and on the RMU's interior shelves may be viewable and accessible by prospective customers. When the RMU is closed for business, the merchandise can be secured by simply closing the door(s) (to form a "closed configuration"), thereby securing the merchandise within. Because the doors have a transparent portion, the closed RMU operates similar to a traditional storefront by displaying merchandise to prospective customers even when in the closed configuration.

According to one exemplary embodiment, an RMU comprises a body having two forward-facing doors and two rearward-facing doors coupled thereto. Door securing devices may be employed for aiding in maintaining the doors in an open configuration when the RMU is open for business. For instance, such a door securing device may couple an open, forward-facing door to an open, rearward-facing door, thereby holding each of the doors open. Furthermore, in certain embodiments, the door securing device also supports marketing materials. For instance, in one embodiment, the door securing device supports the display of signage, thereby enhancing the amount of signage space available in the RMU.

In certain embodiments, the locking mechanisms may be provided for locking the doors in the closed position, thereby restricting unauthorized access to the interior of the RMU when the doors are closed and locked. For instance, a lock and key may be used, a combination lock may be used, a keypad may be used, and/or any other locking mechanism now known or later developed for restricting unauthorized opening of doors may be employed.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:
FIGURE 1A shows a front view of an RMU while in the closed configuration according to one embodiment of the invention.
FIGURE 1B shows a front view of an RMU while in the open configuration according to one embodiment of the invention.
FIGURE 2 shows a front view of an RMU according to one embodiment of the invention, wherein the RMU is in the open configuration while using a marketing device.
FIGURE 3 shows a plan view of an RMU according to one embodiment of the invention, while open for business.
FIGURE 4A shows a front view of an RMU according to one embodiment of the invention, while in the closed configuration and stocked with merchandise.
FIGURE 4B shows a front view of an RMU according to one embodiment of the invention in the open configuration while stocked with merchandise.

### DETAILED DESCRIPTION

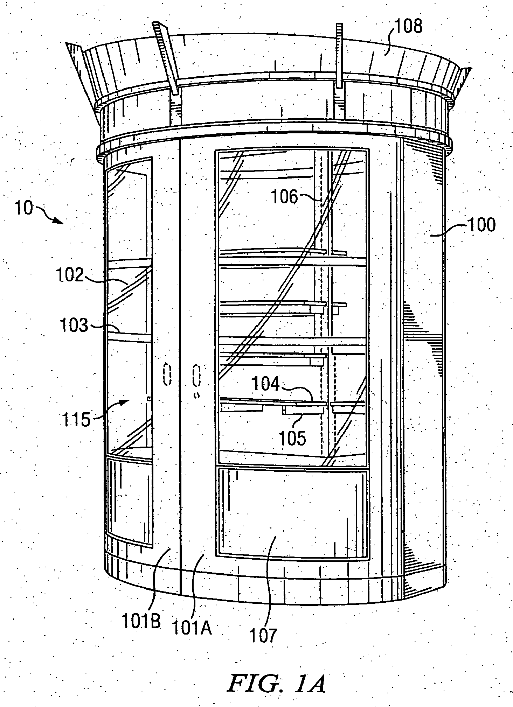

Turning to FIGURE 1A, an exemplary RMU 10 according to one embodiment of the present invention is shown. As described further hereafter, RMU 10 is shown in a "closed configuration" in FIGURE 1A, wherein doors 101A and 101B are closed. RMU 10 may be configured to such closed configuration when it is closed for business. However, in certain implementations, RMU 10 may be configured in the closed configuration for at least a portion of the time when it is open for business, if the vendor so desires.

Exemplary RMU 10 comprises a body 100 having doors 101A and 101B coupled thereto. Such doors 101A and 101B may be coupled to body 100 via hinges or other mechanisms that permit the doors to be opened and closed. While two doors are shown in this example, in other embodiments any number of doors may be so provided. Doors 101A and 101B are forward-facing doors in this example. In certain embodiments, RMU 10 may further comprise one or more rearward-facing doors that are arranged on a side of RMU 10 opposite the forward-facing doors 101A and 101B. Further, any number of doors may be so arranged on any given side of the RMU 10 in alternative embodiments.

While doors 101A and 101B are in the closed configuration, doors 101A and 101B prevent access to interior 115 of RMU 10. Doors 101A and 101B may comprise an opaque portion, such as opaque portion 107 of door 101A. Doors 101A and 101B preferably comprise a transparent portion, such as transparent portion 102 of door 101A. Preferably, transparent portion 102 is substantially of solid material or other suitable material (e.g., material having small apertures therein) that restricts access to the interior 115 of RMU 10 when doors 101A and 101B are closed. Transparent portion 102 allows prospective customers to view interior 115 while doors 101A and 101B are in the closed configuration. Conversely, opaque portion 107 of doors 101A and 101B does not permit viewing of interior 115 through such opaque portion 107 while doors 101A and 101B are closed. As a result, a vendor can display merchandise contained within RMU 10 when doors 101A and 101B are closed by arranging such merchandise such that it is viewable through transparent portion 102.

In the exemplary embodiment of FIGURE 1A, doors 101A and 101B further comprise shelves 103. In a preferred embodiment, shelves 103 are coupled to doors 101A and 101B thereby maximizing the display area of RMU 10. In certain embodiments shelves 103 are removably coupled to doors 101A and 101B. Accordingly, in such embodiments, a vendor may remove such shelves 103 from doors 101A and 101B if so desired. Furthermore, in certain embodiments shelves 103 are adjustable. Therefore, the vendor may dynamically change the arrangement or position of such shelves 103. For instance, the shelves may be adjustable as to permit the vendor to place shelves 103 at higher positions, lower positions, closer together, farther apart, horizontal, vertical, and/or at any angle, etc. In such embodiments, shelves 103 may be selectively arranged in any of a variety of different positions. Therefore, in certain embodiments, shelves 103 may be completely versatile in their position and, if desired, may be completely removed.

In a preferred embodiment, shelves 103 are coupled to doors 101A and 101B such that items placed thereon are viewable through transparent portion 102. Such positioning allows prospective customers to view merchandise arranged on shelves 103 while doors 101A and 101B are in the closed configuration. As a result, RMU 10 acts as many traditional storefronts in that it enables prospective customers to view the merchandise inside RMU 10 while RMU 10 is closed for business, thereby enhancing marketing of the merchandise while securing the merchandise at the same time.

RMU 10 also comprises removable and adjustable interior shelves 104 that are arranged within interior 115. Such interior shelves 104 are not coupled to doors 101A and 101B, but may instead be coupled to some other portion of body 100. As described above with shelves 103, interior shelves 104 may be removable and/or adjustable. Accordingly, a vendor may arrange such interior shelves 104 in any desired configuration for displaying merchandise, information, or other items. In certain embodiments, one or more of such interior shelves 104 may be arranged such that items placed thereon can be viewed through transparent portion 102 when doors 101A and 101B are closed. Exemplary shelf supports 105 illustrate one removable and adjustable means for mounting a shelf (either shelves 103 or additional shelves 104) to RMU 10. As shown, shelf supports 105 may be selectively coupled to any of a plurality of different apertures 106, and a shelf may be placed on such shelf supports 105. In certain implementations, the shelf may be coupled with or integral to a corresponding shelf support 105. This exemplary type of adjustable and removable shelf mounting system is well-known in the art, and is thus not described further. Of course, any means now known or later developed for mounting shelving may be utilized in other implementations.

Because, RMU 10 may be located in an area that is accessible to the public during hours when the RMU 10 is closed for business, it is preferred that merchandise be viewable to passersby even then the RMU 10 is in its closed configuration, thereby maximizing customer exposure and marketing of the merchandise. However, it is also desirable for RMU 10 to secure the merchandise therein to prevent theft or vandalism of the merchandise while RMU 10 is closed for business and left unguarded. Exemplary RMU 10 of FIGURE 1A enables securing of merchandise within interior 115 by closing (and locking) doors 101A and 101B, while also enabling merchandise to be viewed through transparent portion 102 when the doors 101 A and 101B are closed. Further, such transparent portion 102 provides an aesthetically welcoming appearance that does not have the negative connotations of bars or similar securing mechanisms that clearly convey a concern for security.

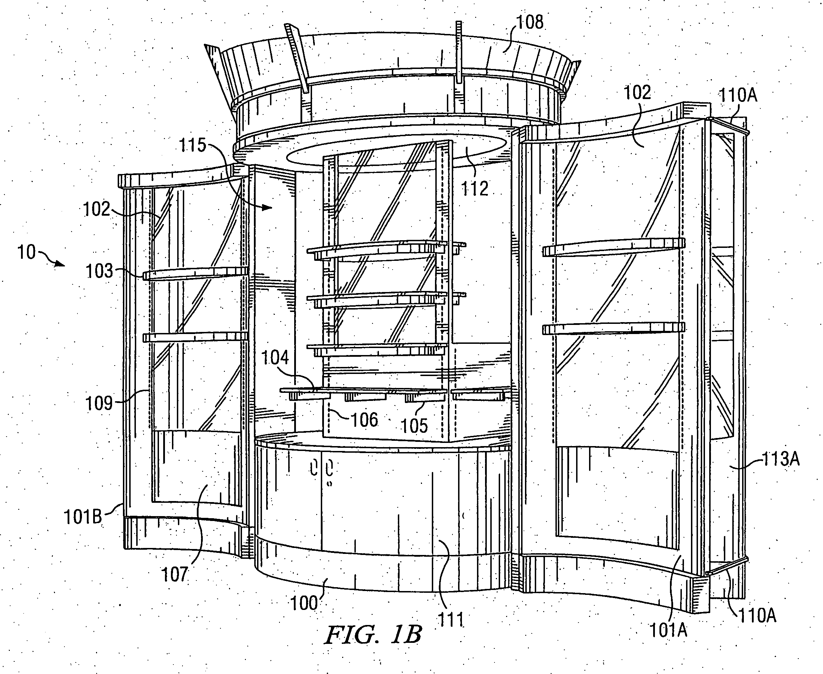

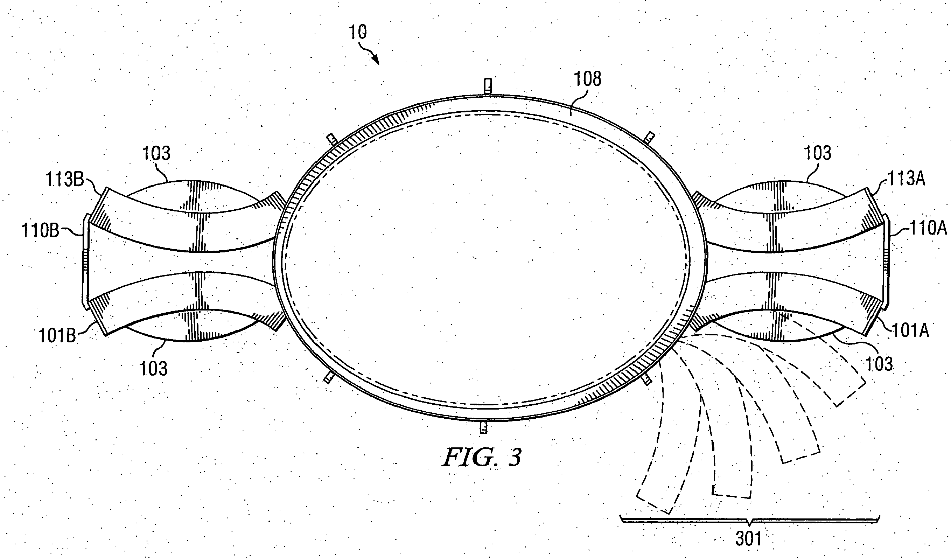

FIGURE 1B shows the exemplary RMU 10 of FIGURE 1A configured in an "open configuration," wherein at least one of doors 101A and 101B are open. In the example shown, both of doors 101A and 101B are open. RMU 10 may be placed in this open configuration when it is open for business. As in FIGURE 1A, RMU 10 comprises body 100 to which forward-facing doors 101A and 101B are coupled. In this example, RMU 10 further comprises rearward-facing doors 113A and 113B (see FIGURE 3), which may each be similar to doors 101A and 101B described above. For instance, as with doors 101A and 101B, doors 113A and 113B may each comprise a transparent portion 102 and one or more shelves 103 coupled thereto. Further, interior 115 of RMU 10 may contain interior shelves, similar to forward-facing interior shelves 104, which are rearward-facing. Accordingly, this exemplary embodiment of RMU 10 permits merchandise to be displayed on both the forward-facing and rearward-facing sides of RMU 10, which may conveniently enable prospective customers to view the merchandise and/or be serviced by the vendor from either of the opposing sides. As mentioned above, in other embodiments RMU 10 may comprise any number of doors, which may be arranged on any side of the RMU 10.

As with the exemplary interior shelving system, which comprises apertures 106 to which shelf supports 105 may be coupled, doors 101A, 101B, 113A, and 113B may likewise include such a shelving system comprising apertures 109 to which shelves 103 may be coupled. Such exemplary type of adjustable and removable shelf mounting system is well-known in the art, and is thus not described further. Of course, any means now known or later developed for mounting shelving may be utilized in other implementations.

In this example, door securing devices 110A and 110B (see FIGURE 3) are provided for maintaining the doors 101A, 101B, 113A, and 113B in the open configuration. As shown, securing device(s) 110A couples forward facing door 101A to adjacent rearward facing door 113A. In certain embodiments, securing device(s) 110A may latch to both doors 101A and 113A, thereby preventing such doors 101A and 113A from closing while the securing device(s) 110A is in place. Thus, in certain embodiments, securing device(s) 1 l0A and 110B may be U-clamps or other suitable devices for holding the opposing doors in an open configuration. In certain embodiments, doors 101A and 113A may be biased such that when positioned in the fully-opened configuration of FIGURE 1B each of doors 101A and 113A applies an opposing force against securing device(s) 110A. For instance, in certain embodiments, each door's hinge may be configured such that the door may be opened to any position within a quiescent region, such as a region containing the positions 301 shown in FIGURE 3 for door 101A, and the door may remain in any position within the quiescent region until an external force is applied thereto. However, when opened beyond its quiescent region to a fully-opened position (such as that of FIGURE 1B), the door may be biased such that it tries to return to the quiescent region, thereby applying force against securing device(s) 110A. By securing door 101A in the open configuration, door 101A creates a display wall whereby shelves 103 display viewable and accessible merchandise to prospective customers. Similarly, when door 101B is in the open configuration, it provides a display wall wherein merchandise may be displayed on its shelves.

Likewise, securing device(s) 110B secures forward-facing door 101B to rearward-facing door 113B thereby maintaining those doors in their open positions. Each of such doors 101B and 113B when so opened further provide display walls for displaying merchandise to prospective customers on their respective shelves 103. Accordingly, two forward-facing displays are provided by doors 101A and 101B when in their opened position, and two rearward-facing displays are provided by doors 113A and 113B when in their opened position. As a result, when doors 101A, 101B, 113A, and 113B are in the open configuration, the doors each effectively provide additional display walls, thereby increasing RMU 10's display area.

When one or more of doors 101A, 101B, 113A, and 113B are in the open position, RMU 10's interior 115 is accessible. Thus, merchandise arranged on interior shelves 104 may be accessed (e.g., for purchase by a customer) when one or more of the doors are opened.

In certain embodiments, cabinetry 111 is included in RMU 10's interior 115. Such cabinetry 111 provides storage space therein in which items may be placed, and cabinetry 111 may conceal and/or restrict access to the items placed therein even when RMU 10 is in the open configuration. For instance, cabinetry 111 may comprise lockable doors for restricting access to items therein. In certain embodiments, cabinetry 111 is made of opaque material, which hides items placed therein from the view of prospective customers. As a result, cabinetry 111 may store merchandise and personal affects, money, and/or other items, and/or hide from view unsightly wires and equipment (for example electrical wires, modems, and cash register, printer, etc.). In other embodiments, cabinetry 111 is of transparent material, which enables items arranged therein to be viewed by prospective customers, but the doors of such cabinetry 111 may restrict access to such items. For example, cabinetry 111 may be formed of transparent material, and merchandise having a high theft rate (e.g., easily stolen merchandise, such as small merchandise) or particularly valuable merchandise may be placed in such cabinetry, which allows for such merchandise to be viewed but restricts access of such merchandise by prospective customers (e.g., a vendor may be required to unlock the cabinetry doors and retrieve merchandise for prospective customers). FIGURE 1B shows exemplary cabinetry 111 located at the bottom portion of interior 115; however, such cabinetry 111 may instead or in addition be located at any other position within interior 115 including as examples within crown 108 or affixed to any or all of the doors 101A-101B and 113A-113B.

The top portion of exemplary RMU 10 comprises crown 108. Crown 108 may be provided for any number of purposes, including decorative or aesthetic purposes, signage display, etc. In some embodiments, crown 108 could also store or display items (e.g., merchandise) as well. Additionally, lighting 112 is also included. Such lighting 112 may be affixed to crown 108 or otherwise implemented within RMU 10. Light 112 may operate while RMU is in the open position, closed position, or both, thereby effectively illuminating the interior 115 of RMU 10.

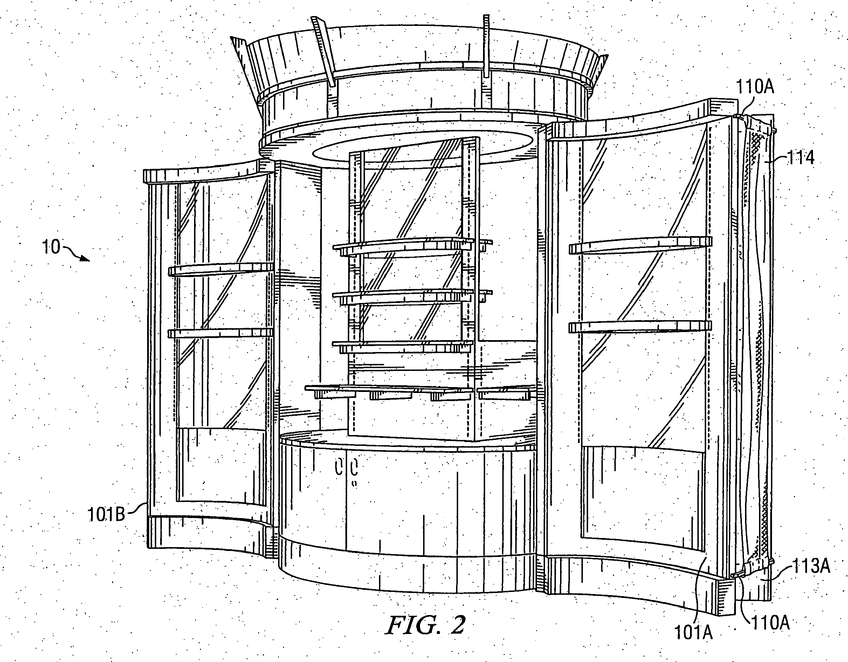

Turning to FIGURE 2, an example of RMU 10 in the open configuration is shown as in FIGURE 1B. In FIGURE 2 an exemplary marketing device 114 (e.g., signage) is implemented by door securing device 110A. As discussed above with FIGURE 1B, door securing device 110A may be implemented to maintain doors 101A and 113A in their opened position. Likewise, securing device 110B (see FIGURE 3) may be implemented to maintain doors 101B and 113B (see FIGURE 3) in their opened position. As a result, RMU 10 is maintained in the open configuration. While securing devices 110A and 110B function to hold the doors open, door securing devices 110A and 110B in this exemplary embodiment also function to support marketing devices, such as the marketing device 114 shown. Marketing device 114 may comprise any marketing device, such as a sign or other information conveying device, for displaying information, such as the name of the business, a sale promotion, hours of operation, or any other information desired. By utilizing door securing devices 110A and 110B to support marketing device 114, RMU 10 enhances the signage space available. Further, marketing device 114 may advantageously conceal the open space between doors 101A and 113A. To configure the RMU 10 in the closed position, the vendor removes door securing devices 110A and 110B and closes the doors 101A-101B and 113A-113B. When RMU 10 is so configured in its closed configuration, the door securing devices 110A and 110B, as well as the marketing devices 114 may be stored, or if desired marketing devices 114 may be mounted elsewhere on RMU 10.

Turning to FIGURE 3, a plan view (from the top) of RMU 10 in the open position is shown. In this example, doors 101A and 113A are maintained in their fully-opened position by door securing device 110A latched thereto. Likewise, doors 101B and 113B are maintained in their fully-opened position by door securing device 110B latched thereto. Of course, in certain embodiments one or more of the doors may be opened by an amount less than their fully-opened position. For instance, as illustrated by the various opened positions 301 depicted for door 101A, any of the doors may be partially opened by any desired amount. Further, in certain embodiments, fewer than all of the doors may be opened if so desired. For instance, in certain implementations it may be desirable to open the forward-facing doors 101 A and 101B, while having the rearward-facing doors 113A and 113B closed. Any such configuration is available as may be desired by a given vendor.

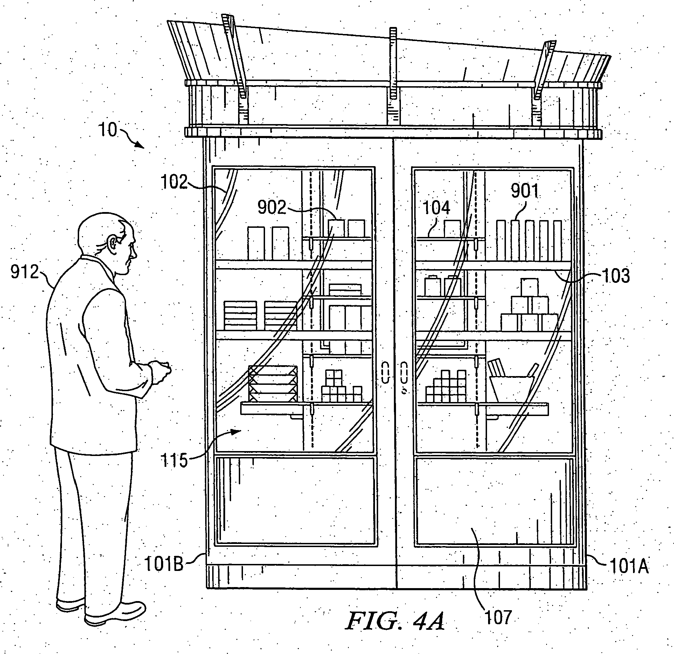

FIGURES 4A-4B show an exemplary application of RMU 10 by a vendor. FIGURE 4A shows RMU 10 in the closed configuration with the vendor's merchandise secured in the RMU and on display to prospective customers. As explained above, shelves 103 may be implemented on doors 101A and 101B, and as illustrated in FIGURE 4A merchandise arranged on such shelves 103 can be viewed through transparent portion 102 when the doors 101A and 101B are closed. In this example, merchandise 901 is arranged on shelf 103 such that a prospective customer 912 can view such merchandise 901 through transparent portion 102 when doors 101A and 101B are closed. Furthermore, merchandise 902 arranged on interior shelves 104 is viewable by prospective customer 912 through transparent portion 102 when doors 101A and 101B are closed.

As a result, prospective customer 912 can view displayed merchandise when RMU 10 is in the closed configuration. However, while RMU 10 enables merchandise to be displayed to prospective customer 912 when in its closed configuration, the closed configuration also secures the merchandise in interior 115 of RMU 10. For instance, transparent portion 102 of doors 101A and 101B both permits merchandise within RMU 10 to be viewed while the doors are closed and restricts unauthorized users (e.g., prospective customer 912) from accessing the merchandise. Furthermore, opaque portion 107 may conceal certain items from the view of prospective customer 912, such as POS equipment, money, certain merchandise, etc.

By allowing merchandise to be displayed while in the closed configuration, RMU 10 advantageously enhances marketing of the merchandise. For instance, RMU 10 may be placed in an area that is publicly accessible beyond the hours of operation of the RMU, and RMU 10 enables prospective customers to view merchandise contained in RMU 10 even after it has closed for business. As a result, prospective customer 912 may view merchandise offered by the vendor when RMU 10 is closed for business, and if prospective customer 912 desires any such merchandise, the customer can return at a later time to purchase such merchandise when RMU 10 is open for business. Therefore, the displaying of merchandise while RMU 10 is in the closed configuration enhances exposure of the vendor's merchandise, thereby maximizing sales.

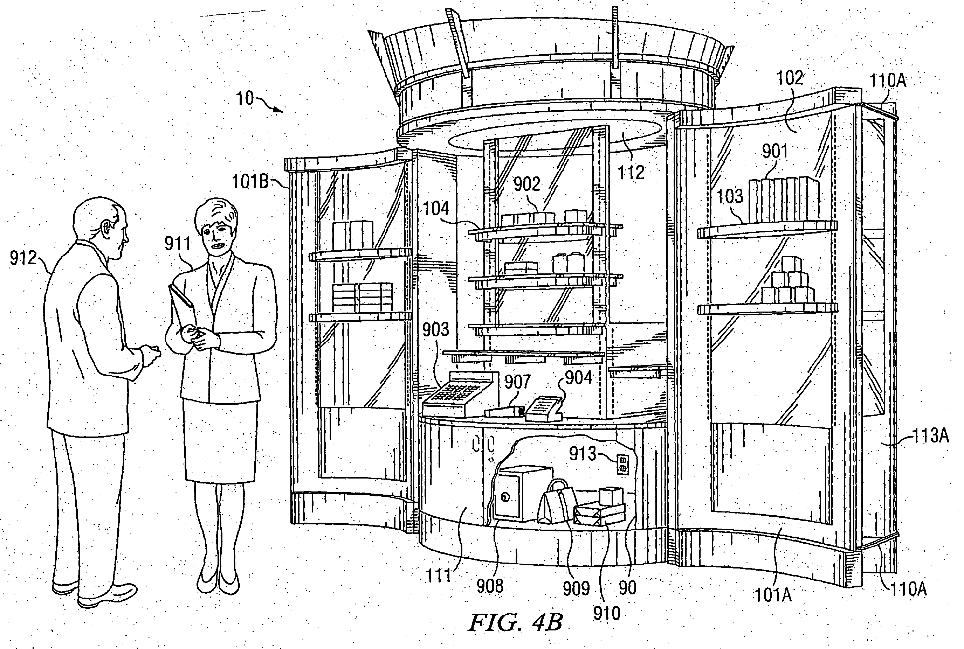

FIGURE 4B shows RMU 10 in the open configuration, stocked with merchandise, and operating as a fully functional store. When business opens for the day, vendor 911 opens doors 101A, 101B, 113A, and 113B (see FIGURE 3) and secures them in the open position using securing devices 110A and 110B (see FIGURE 3). Merchandise 901 and 902 may be attractively arranged on shelves 103 and 104, and such merchandise need not be rearranged when RMU 10 is configured in the closed position (as shown in FIGURE 4A). Thus, in this example, vendor 911 need not rearrange the merchandise when opening for business. That is, the merchandise may be arranged on shelves 103 and 104 in a manner that is suitable for display of the merchandise both when RMU 10 is in the closed configuration and when RMU 10 is in the open configuration. Of course, if vendor 911 wishes to display the merchandise differently after opening the doors, vendor 911 could rearrange the merchandise as desired.

RMU 10 may operate as a fully functional store thereby displaying and selling merchandise, storing merchandise and other business items, and conducting POS transactions. Therefore, RMU 10 may be equipped with a cash register 903, credit card machine 904, other POS equipment 907 (for example, a modem), money storage 908 (for example, a safe), and/or any other equipment for conducting POS transactions. In this example, cabinetry 111 is opaque and used to conceal items from the view of prospective customer 912. In this example, cash register 903 and credit card machine 904 are positioned on top of cabinetry 111 for easy access. In this example, cables 906 extending from cash register 903 and credit card machine 904 run into hole 905 thereby extending into the interior 90 of cabinetry 111. Located in interior 90 of cabinetry 111 are any other items for conducting POS transactions that need not be easily accessible, e.g., other POS equipment 907 (for example a modem), money storage 908 (for example a safe), and electrical outlet 913. As a result, readily used items are arranged on top of cabinetry 111, while unsightly, rarely accessed items remain concealed from prospective customer 912's view. Furthermore, other items may be hidden from prospective customer 912's sight as well. As a result, interior 90 of cabinetry 111 may also store extra merchandise 910 and the personal effects 909 of vendor 911 (for example a packed lunch or purse).

While exemplary RMUs are shown herein in which the vendor 911 works from the exterior of the RMU, in certain implementations an interior of the RMU may be implemented to allow for the vendor and/or customers to be inside of the RMU. Various embodiments of the present invention in which an RMU comprises one or more doors having a transparent portion may be implemented in a manner to allow for the vendor and/or customers to be inside of the RMU.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

### PREFERRED EMBODIMENTS

The present invention is further characterized by the following 34 preferred embodiments.
1. A retail merchandising unit comprising:
   a body;
   at least one door coupled to said body;
   said at least one door comprising at least one shelf for displaying merchandise; and
   said at least one door further comprising at least one transparent portion through which merchandise displayed on said at least one shelf can be viewed when said door is closed.
2. The retail merchandising unit of embodiment 1 further comprising:
   at least one securing device to secure said at least one door in the open position.
3. The retail merchandising unit of embodiment 1 further comprising:
   a plurality of doors.
4. The retail merchandising unit of embodiment 3 wherein said plurality of doors comprises:
   forward facing doors and rearward facing doors.
5. The retail merchandising unit of embodiment 2 further comprising;
   said securing device which couples two doors thereby securing said two doors in the open position.
6. The retail merchandising unit of embodiment 1 wherein said transparent portion is solid.
7. The retail merchandising unit of embodiment 1 wherein said at least one shelf is removably mountable.
8. The retail merchandising unit of embodiment 7 wherein said at least one shelf is adjustable.
9. The retail merchandising unit of embodiment 1 further comprising:
   at least one additional shelf located within said body.
10. The retail merchandising unit of embodiment 9 wherein said at least one additional shelf is removably mountable.
11. The retail merchandising unit of embodiment 10 wherein said at least one additional shelf is adjustable.
12. The retail merchandising unit of embodiment 1 wherein said at least one door comprises:
   a non-transparent portion.
13. The retail merchandising unit of embodiment 1 further comprising:
   at least one light.
14. The retail merchandising unit of embodiment 1 further comprising:
   at least one electrical outlet.
15. The retail merchandising unit of embodiment 2 further comprising:
   at least one marketing device mounted to said securing device.
16. The retail merchandising unit of embodiment 1 further comprising:
   cabinetry for securing objects wherein said cabinetry comprises locking doors.
17. A retail merchandising unit comprising:
   moveable means for moving to selectively configure the retail merchandising unit in an open configuration that permits access to an internal portion of said retail merchandising unit and selectively configure the retail merchandising unit in a closed configuration that obstructs access to said internal portion of said retail merchandising unit;
   said moveable means comprising means for displaying merchandise; and
   said moveable means comprising a transparent portion through which merchandise arranged on the display means can be viewed when said retail merchandising unit is configured in said closed configuration.
18. The retail merchandising unit of embodiment 17 further comprising:
   means for locking said retail merchandising unit in said closed configuration.
19. The retail merchandising unit of embodiment 17 comprising:
   means for adjusting said means for displaying merchandise.
20. The retail merchandising unit of embodiment 17 further comprising:
   means for securing objects in a non-transparent portion within said retail merchandising unit.
21. The retail merchandising unit of embodiment 17 further comprising:
   means for lighting said retail merchandising unit.
22. The retail merchandising unit of embodiment 17 further comprising:
   means for providing electricity to said retail merchandising unit.
23. The retail merchandise unit of embodiment 17 further comprising:
   means for displaying a marketing device.
24. A method comprising:
   providing a retail merchandising unit comprising:
      a body;
      at least one door coupled to said body;
      said at least one door comprising at least one shelf for displaying merchandise;
      said at least one door comprising at least one transparent portion through which merchandise displayed on said at least one shelf can be viewed when said door is closed;
      arranging said retail merchandising unit in a publicly accessible area;
      displaying said merchandise within said retail merchandising unit such that said merchandise is viewable when said retail merchandising unit is secured in a closed position; and
      completing a point of sales transaction at said retail merchandising unit.
25. The method of embodiment 24 further comprising:
   locking said at least one door of said retail merchandising unit in said closed position.
26. The method of embodiment 24 further comprising:
   securing said at least one door of said retail merchandising unit in said open position.
27. The method of embodiment 24 further comprising:
   mounting said at least one shelf to said at least one door.
28. The method of embodiment 24 further comprising:
   removably mounting additional shelves within said body.
29. The method of embodiment 28 further comprising:
   adjusting at least one of said additional shelves.
30. The method of embodiment 24 further comprising:
   securing objects in a non-transparent portion of said body.
31. The method of embodiment 24 further comprising:
   lighting said retail merchandising unit.
32. The method of embodiment 24 further comprising:
   providing electricity to said retail merchandising unit.
33. The method of embodiment 26 further comprising:
   mounting at least one marketing device to a device which secures said at least one door of said retail merchandising unit in said open position.
34. The method of embodiment 24 further comprising:
   utilizing one of a list of the following to complete said point of sales transaction:
      sales register and credit card machine.

## Claims

1. A retail merchandising unit comprising:
a body;
at least one door coupled to said body;
said at least one door comprising at least one shelf for displaying merchandise; and
said at least one door further comprising at least one transparent portion through which merchandise displayed on said at least one shelf can be viewed when said door is closed.

2. The retail merchandising unit of claim 1 further comprising:
at least one securing device to secure said at least one door in the open position.

3. The retail merchandising unit of claim 1 further comprising:
a plurality of doors.

4. The retail merchandising unit of claim 3 wherein said plurality of doors comprises: forward facing doors and rearward facing doors.

5. The retail merchandising unit of claim 2 further comprising;
said securing device which couples two doors thereby securing said two doors in the open position.

6. The retail merchandising unit of claim 1 wherein said transparent portion is solid.

7. The retail merchandising unit of claim 1 wherein said at least one door comprises:
a non-transparent portion.

8. A method comprising:
providing a retail merchandising unit comprising:
a body;
at least one door coupled to said body;
said at least one door comprising at least one shelf for displaying merchandise;
said at least one door comprising at least one transparent portion through which merchandise displayed on said at least one shelf can be viewed when said door is closed;
arranging said retail merchandising unit in a publicly accessible area;
displaying said merchandise within said retail merchandising unit such that said merchandise is viewable when said retail merchandising unit is secured in a closed position; and
completing a point of sales transaction at said retail merchandising unit.

9. The method of claim 8 further comprising:
securing said at least one door of said retail merchandising unit in said open position.

10. The method of claim 9 further comprising:
mounting at least one marketing device to a device which secures said at least one door of said retail merchandising unit in said open position.
